# EUROPEAN PATENT SPECIFICATION

(11) **EP 0 234 882 B1**
(45) Date of publication and mention of the grant of the patent: **13.01.1993**
(21) Application number: 87301478.1
(22) Date of filing: 20.02.1987
(51) Int. Cl.: C09J 179/08, C08G 73/10, B32B 27/04

(54) **High-temperature adhesive of polyimide**
Hochtemperatur-Polyimidklebstoff
Adhésif à base de polyimide résistant aux hautes températures

(30) Priority: 25.02.1986 JP 38390/86; 15.04.1986 JP 84945/86
(43) Date of publication of application: 02.09.1987
(73) Proprietor: MITSUI TOATSU CHEMICALS, Inc., Chiyoda-Ku Tokyo 100 (JP)
(72) Inventor: Tamai, Shoji, Yokohama-shi Kanagawa-ken (JP); Ohta, Masahiro, Yokohama-shi Kanagawa-ken (JP); Kawashima, Saburo, Yokosuka-shi Kanagawa-ken (JP); Oikawa, Hideaki, Yokohama-shi Kanagawa-ken (JP); Ohkoshi, Kouji, Zushi-shi Kanagawa-ken (JP); Yamaguchi, Akihiro, Kamakura-shi Kanagawa-ken (JP)
(74) Representative: Hayward, Denis Edward Peter

(56) References cited:
- FR-A- 2 578 545
- CHEMICAL ABSTRACTS, vol. 100, no. 14, 2nd April 1984, page 58, abstract no. 104703f, Columbus, Ohio, US; & JP-A-58 157 190 (HITACHI CHEMICAL CO., LTD) 19-09-1983
- CHEMICAL ABSTRACTS, vol. 102, no. 1, 8th July 1985, page 657, abstract no. 88541k, Columbus, Ohio, US; & JP-A-59 76 451 (HITACHI LTD) 01-05-1984

## Description

This invention relates to high-temperature adhesives and particularly to adhesives having excellent adhesive strength and high-temperature stability.

Polyimides obtained by the reaction of tetracarboxylic dianhydrides with diamines have been known up to this time to have various outstanding properties and good high-temperature stability. Therefore, such polyimides are expected to achieve wide application in those fields which require stability at high temperatures.

A form of polyimide has recently been developed and found a use also in the adhesive field. For example, in TOKKAISHO 58-157190 (1983), polyimides derived from various diamines and tetracarboxylic dianhydrides are disclosed to have application as adhesives between a polyimide film and a copper foil in a flexible copper-clad circuit substrate.

Although polyimide adhesive is excellent in high-temperature stability and adhesive strength, it is further desirable that it should have good high-temperature flowability and be easy to process at the time of adhesion. Also, since traditional polyimide is generally poor in light-transmittance and, in addition, has a tinge of brown, it has been unsatisfactory for use as an adhesive where good transparency is required.

Therefore, it is an object of this invention to provide a novel polyimide adhesive having high light-transmittance, good transparency, outstanding high-temperature flowability and excellent processability, in addition to the ability to maintain adhesive strength during and after use at high temperatures.

The inventors have investigated thoroughly to achieve the above-mentioned object and thereby arrived at the present invention.

The present invention affords the use as a high-temperature resistance adhesive of a polyimide having recurring units of the formula (I): 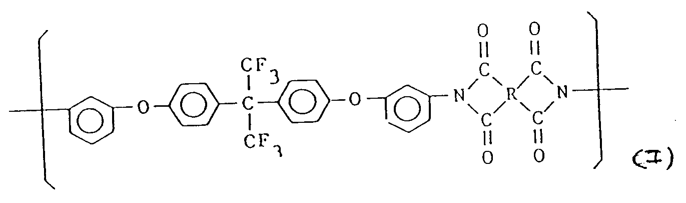
wherein R is a tetra-valent aromatic radical selected from: 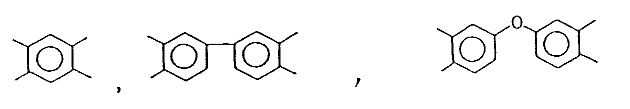
and 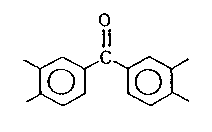
The invention further provides a method for adhering surfaces to one another which comprises applying a polyimide having recurring units of the formula (I): 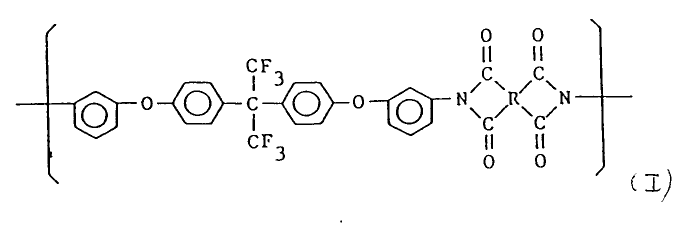
wherein R is a tetra-valent aromatic radical selected from: 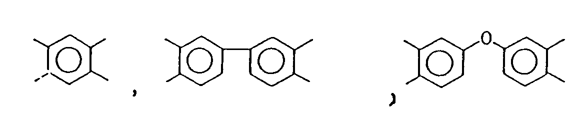
and 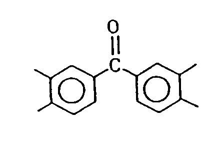
to a surface of a substrate, placing said surface of the substrate face to face with a surface of another substrate and pressing the two surfaces together while heating to a temperature above the glass transition temperature of said polyimide.

The polyimide used in the present invention and having the above formula (I) can be prepared by the following method.

In this method, 2,2-bis[4-(3-aminophenoxy)phenyl]-1,1,1,3,3,3-hexafluoropropane, which is an ether diamine having the following formula (II): 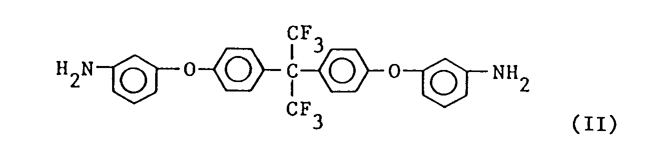
is reacted as a diamine component with one or more tetracarboxylic dianhydrides and the resultant polyamic acid having recurring units of the following formula (III): 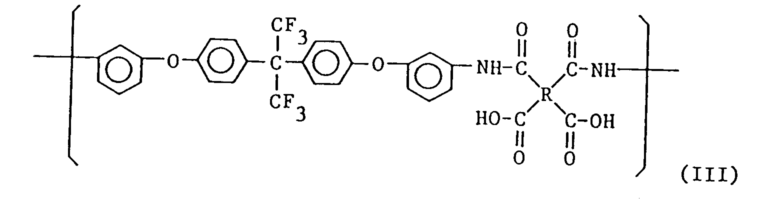
(where R is the same as before)
is further subjected to a ring-closing reaction by dehydration to give polyimide.

The polyimide employed in this invention benefits from the use of 2,2-bis[4-(3-aminophenoxy)phenyl]-1,1,1,3,3,3-hexafluoropropane as the diamine component. It has not previously been known actually to use in the adhesive field a polyimide which is derived from an ether-diamine having ether-linkages and aromatic amino radicals in the same molecule.

In the aforesaid TOKKAISHO 58-157190 (1983), it is suggested that a polyimide prepared from 2,2-bis[4-(4-aminophenoxy)phenyl]-1,1,1,3,3,3-hexafluoropropane and pyromellitic dianhydride may be used as an adhesive. Polyimide derived from this diamine, however, has a high glass transition temperature of above 300°C. Therefore, the adhesives prepared from this polyimide are very poor in processability, and hence many troubles and defects result in bonding operations and the properties of the bonded articles are adversely affected.

Also in TOKKAISHO 59-76451 (1984), a polyimide is disclosed which is derived from the diamine having the above formula (II) and pyromellitic dianhydride. This literature, however, makes no suggestion at all concerning the use of said polyimide for adhesives.

The polyimides used for this invention can afford adhesives having excellent transparency, good flowability at high temperatures and outstanding processability, in addition to significant high-temperature stability characteristics.

The polyimide used in the present invention can normally be prepared by reacting 2,2-bis[4-(3-aminophenoxy)phenyl]-1,1,1,3,3,3-hexafluoropropane with a tetracarboxylic dianhydride in organic solvents.

Tetracarboxylic dianhydrides for use in the method of this invention have the formula (IV): 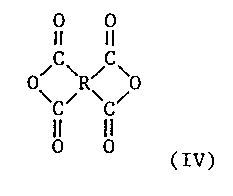
(where R is a tetra-valent radical selected from those defined before).

Tetracarboxylic dianhydrides which can be used in the method include, for example, ethylene tetracarboxylic dianhydride, cyclopentane tetracarboxylic dianhydride pyromellitic dianhydride, 3,3',4,4'-benzophenone tetracarboxylic dianhydride, 2,2',3,3'-benzophenone tetracarboxylic dianhydride, 3,3',4,4'-biphenyltetracarboxylic dianhydride, 2,2',3,3'-biphenyltetracarboxylic dianhydride, 2,2-bis(3,4-dicarboxyphenyl)propane dianhydride, 2,2-bis(2,3-dicarboxyphenyl)propane dianhydride, bis(3,4-dicarboxyphenyl) ether dianhydride, bis(3,4-dicarboxyphenyl) sulfone dianhydride, 1,1-bis-(2,3-dicarboxyphenyl)ethane dianhydride, bis(2,3-dicarboxyphenyl)methane dianhydride, bis(3,4-dicarboxyphenyl)methane dianhydride, 2,3,6,7-napthalenetetracarboxylic dianhydride, 1,4,5,8-napthalenetetracarboxylic dianhydride, 1,2,5,6-napthalenetetracarboxylic dianhydride, 1,2,3,4-benzenetetracarboxylic dianhydride, 3,4,9,10-perylenetetracarboxylic dianhydride, 2,3,6,7-anthracenetetracarboxylic dianhydride and 1,2,7,8-phenanthrenetetracarboxylic dianhydride. The tetracarboxylic dianhydride can be used alone or in a mixture of two or more.

Preferred in particular among these dianhydrides are pyromellitic dianhydride,
3,3',4,4'-biphenyltetracarboxylic dianhydride and bis(3,4-dicarboxyphenyl) ether dianhydride. Polyimide obtained from these dianhydrides has extraordinarily excellent transparency and good high temperature flowability.

3,3',4,4'-benzophenonetetracarboxylic dianhydride is also a preferred dianhydride which can produce polyimide having prominent flowability at high temperature.

The organic solvents used in the reaction include, for example, N,N-dimethylformamide, N,N-dimethylacetamide, N,N-diethylacetamide, N,N-dimethylmethoxyacetamide, N-methyl-2-pyrrolidone, 1,3-dimethyl-2-imidazolidinone, N-methylcaprolactam, 1,2-dimethoxyethane, bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethyl sulfone, tetramethylurea, hexamethylphosphoramide, m-cresol, p-chlorophenol and anisole. These solvents can be used alone or in mixtures of two or more.

The reaction temperature is normally 200°C or less, preferably 50°C or less. The reaction pressure is not particularly restricted and atmospheric pressure is sufficient for carrying out the reaction. The reaction time depends upon the type of solvents, the reaction temperature, and the tetracarboxylic dianhydrides used, and is normally long enough to complete the formation of polyamic acid. Reaction for 4-24 hours is normally sufficient.

Such reaction affords polyamic acid having recurring units of the following formula: 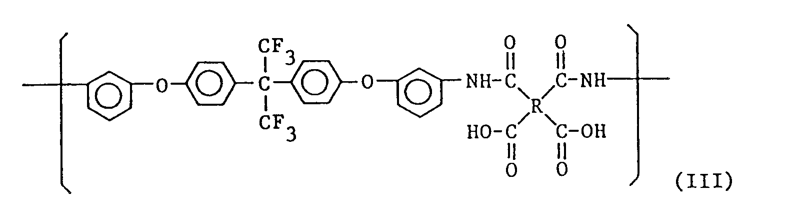
(where R is the same as before).

In the next step, thermal dehydration of the polyamic acid solution at 100 to 300°C, or chemical dehydration by treating with an imidizing agent such as acetic anhydride, afford the corresponding polyimide having recurring units of the formula (I): 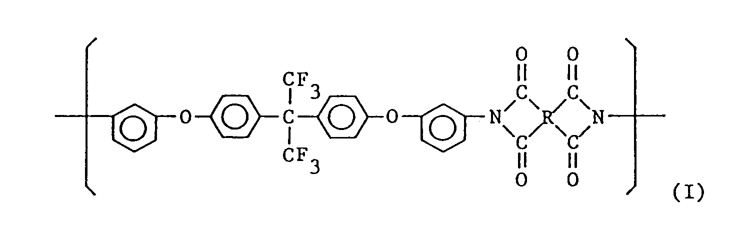
The method of using the polyimide as an adhesive is roughly divided into two procedures.
(1) The polyamic acid precursor dissolved in organic solvent is used as an adhesive solution, and imidized before adhesion.
(2) The polyimide is used in that form.

In the procedure (1), the adhesive solution is an organic solvent solution of polyamic acid. It may be the resultant reaction mixture of polyamic acid obtained by reacting 2,2-bis[4-(3-aminophenoxy)phenyl]-1,1,1,3,3,3-hexafluoropropane with the tetracarboxylic dianhydride in the organic solvents. It also may be a solution containing polyamic acid as the main component and polyimide as the cyclized product of the polyamic acid. Thus the polyamic acid adhesive may be a solution or suspension containing the polyimide as an auxiliary ingredient.

When applying the polyamic acid solution, a thin layer is formed on the substrate to be bonded, followed by preheating the coated substrate in air for a desired period at 180 to 350°C preferably about 220°C. Excess solvents are removed and the polyamic acid is converted to polyimide on the substrate. The coated substrate is overlapped contiguously with another substrate and then strongly bonded by pressing under a pressure of 1 - 1,000 kg/cm² at a temperature of 50 - 400°C, followed by curing at a temperature of 100 - 400°C.

In the procedure (2), the polyimide may be a film previously prepared by thermal or chemical dehydration of the polyamic acid with a dehydrating agent such as acetic anhydride. The polyimide can also be a powder substantially consisting of the polyimide as it is. In these cases, some of the polyamic acid may be contained in the polyimide.

To apply the polyimide films or the powder for adhesion, these are inserted between the substrates and pressed under a pressure of 1 - 1,000 kg/cm² at a temperature of 50 - 400°C. The adherends can be strongly bonded by curing at a temperature of 100 - 400°C.

### EXAMPLES

The present invention will be better understood from the detailed descriptions contained in the following Examples, which include a Synthesis Example, Examples of the preparation and use of the polyimides as adhesives and a Comparative Example.

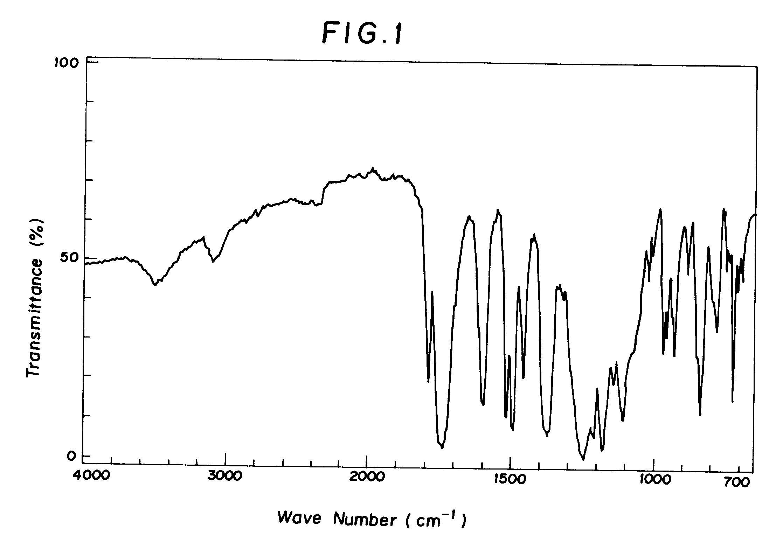

In the accompanying drawing, Figure 1 illustrates an IR absorption spectrum of one example of a polyimide used in the practice of this invention.

### Synthesis example

2,2-Bis[4-(3-aminophenoxy)phenyl]-1,1,1,3,3,3-hexafluoropropane for use in this invention was prepared by the following process.

A 200ml glass reaction vessel was charged with 20 grams (0.059 mol) of 2,2-bis(4-hydroxyphenyl)-1,1,1,3,3,3-hexafluoropropane, 24 grams (0.14 mol) of m-dinitrobenzene, 19.4 grams of potassium carbonate and 100ml of N,N-dimethylformamide. The mixture was reacted for 7 hours at 140 to 150°C. After ending the reaction, the resultant reaction mixture was cooled and poured into 1000ml of water. Crude 2,2-bis[4-(3-nitrophenoxy)phenyl]-1,1,1,3,3,3-hexafluoropropane separated as a tarry material. The tarry material was dissolved in benzene and washed with water. The benzene layer was dried with magnesium sulfate and column-chromatographed over silica gel. Purified 2,2-bis[4-(3-nitrophenoxy)phenyl]-1,1,1,3,3,3-hexafluoropropane was obtained as a yellow oil in an amount of 28.3 grams (83% yield).

In the next step, a 300ml glass reaction vessel was charged with 20 grams (0.035 mol) of 2,2-bis[4-(3-nitrophenoxy)phenyl]-1,1,1,3,3,3-hexafluoropropane, 2 grams of active carbon, 0.2 gram of ferric chloride hexahydrate and 100ml of isopropyl alcohol. The mixture was stirred under reflux for 30 minutes and then 7 grams (0.14 mol) of hydrazine hydrate was added dropwise over 2 hours at 60 to 70°C, followed by further stirring for 5 hours under reflux. The resultant reaction mixture was cooled and filtered to remove the catalyst, and 60ml of isopropyl alcohol was distilled off from the filtrate. The residue had added to it 80 grams of 17.5% hydrochloric acid, followed by 10 grams of sodium chloride, and was cooled to 20 to 25°C with stirring. The precipitated crystals were filtered, and recrystallized again by using 40ml of isopropyl alcohol and 80 grams of 17.5% hydrochloric acid. The filtered crystals were dissolved in 50% isopropyl alcohol and neutralized with aqueous ammonia.

The separated crystals were filtered, washed with water, dried and recrystallized from a solvent mixture of benzene and n-hexane. 2,2-Bis[4-(3-aminophenoxy)phenyl]-1,1,1,3,3,3-hexafluoropropane was thus obtained in an amount of 13.6 grams (75% yield) and in the form of colourless crystals having a melting point of 137 to 139°C and a purity of 99.2% according to high speed liquid chromatography.

| Elemental Analysis (C₂₇ H₂₀ N₂ F₆O₂) | | | | |
|---|---|---|---|---|
| | C | H | N | F |
| Calculated (%) | 62.55 | 3.86 | 5.41 | 22.00 |
| Found (%) | 69.86 | 5.20 | 5.20 | 21.95 |
| IR(KBr, cm⁻¹): 3480 and 3380 (amino group) 1240 (ether linkage) | | | | |

### Example 1

A reaction vessel equipped with a stirrer, reflux condenser and nitrogen inlet tube was charged with 10.36 grams (0.02 mol) of 2,2-bis[4(3-aminophenoxy)phenyl]-1,1,1,3,3,3-hexafluoropropane and 44.16 grams of N,N-dimethylacetamide, and 4.273 grams (0.0196 mol) of pyromellitic dianhydride were added portion by portion at room temperature under a nitrogen atmosphere with care taken not to raise the solution temperature above 30°C. The reaction mixture was further stirred for 20 hours at room temperature.

The polyamic acid thus obtained had an inherent viscosity of 0.55 dl/g at 35°C in 0.5% N,N-dimethylacetamide solution.

After diluting the polyamic acid solution by adding 88.3 grams of N,N-dimethylacetamide and stirring for 30 minutes, 8.08 grams (0.08 mol) of triethylamine and 12.24 grams (0.12 mol) of acetic anhydride were added dropwise and stirring was further continued at room temperature under a nitrogen atmosphere.

A light yellow polyimide powder started to precipitate at about 7 hours after the addition, and the stirring was further continued for 20 hours.

The separated polyimide powder was filtered, washed with methanol, and dried at 180°C for 24 hours under reduced pressure.

The polyimide powder thus obtained was 13.68 grams (97% yield) in amount and had a crystallinity of 28.2% according to X-ray analysis.

Figure 1 illustrates the IR absorption spectrum of the polyimide thus obtained. In the spectrum, remarkable absorption is found at 1780cm⁻¹ and 1720cm⁻¹, which are characteristic absorption bands of an imide ring, and at 1240cm⁻¹ which is a characteristic absorption band of an ether linkage.

The powder had a glass transition temperature of 231°C, a melting point of 387°C in accordance with the DSC method and a 5% weight decrease temperature in air of 528°C in accordance with DTA-TG.

The polyimide powder obtained by the practice of this example had a melt viscosity of 9.9x10³ poises at 420°C measured with a Japan High Polymer Society type flow tester (CFT-500, from Shimadzu Seisakusho) using an orifice having a diameter of 0.1cm under a 300 kg load. The strand obtained was light brown, transparent and had a high flexibility.

The polyimide powder was inserted between cold rolled steel panels (JIS 3141, spec/SD, 25 x 100 x 1.6mm) which were preheated at 130°C and pressed for five minutes at 340°C with a pressure of 20 kg/cm².

The bonded specimen had a lap shear strength of 285 kg/cm² at room temperature and 195 kg/cm² at 200°C in accordance with JIS K-6848 and K-6850.

### Example 2

A reaction vessel equipped with a stirrer, reflux condenser and nitrogen inlet tube was charged with 5.18 grams (0.01 mol) of 2,2-bis(4-(3-aminophenoxy)phenyl]-1,1,1,3,3,3-hexafluoropropane and 22.1 grams of N,N-dimethylacetamide, and 2.18 grams (0.01 mol) of pyromellitic dianhydride were added portion by portion at room temperature under a nitrogen atmosphere with care taken not to raise the solution temperature above 30°C. The reaction mixture was further stirred for 20 hours at room temperature.

The polyamic acid thus obtained had an inherent viscosity of 2.1 dl/g.

The polyamic acid solution was applied on a cold rolled steel panel which was previously washed with trichloroethylene and dried for one hour each at 100°C and 220°C. The coated panel was overlapped with another cold rolled steel panel and pressed for five minutes at 340°C with a pressure of 20 kg/cm².

The bonded specimen thus obtained had a lap shear strength of 280 kg/cm² at room temperature and 204 kg/cm² at 200°C.

A part of the polyamic acid solution was cast on a glass plate and heated for one hour each at 100°C, 200°C and 300°C.

The polyimide film thus obtained had a thickness of about 50 microns, a glass transition temperature of 248°C in accordance with the TMA penetration method and a 5% weight decrease temperature in air of 526°C in accordance with DTA-TG.

The polyimide film also had a tensile strength of 12.0 kg/mm² and an elongation of 10% in accordance with ASTM D-882.

Furthermore, the polyimide film had a light-transmittance of 85% and a haze of 0.65% in accordance with ASTM D-1003.

The polyimide film was inserted between cold rolled steel panels which were preheated at 130°C and pressed for five minutes at 340°C with a pressure of 20 kg/cm². The bonded specimen had a lap shear strength of 290 kg/cm² at room temperature and 200 kg/cm² at 200°C.

### Example 3

A reaction vessel equipped with a stirrer, reflux condenser and nitrogen inlet tube was charged with 10.36 grams (0.02 mol) of 2,2-bis[4-(3-aminophenoxy)phenyl]-1,1,1,3,3,3-hexafluoropropane, 4.273 grams (0.0196 mol) of pyromellitic dianhydride and 133.8 grams of m-cresol and heated to raise its temperature with stirring under a nitrogen atmosphere. A light orange, transparent and homogeneous solution was obtained at about 60°C. The solution was heated up to 150°C and further stirred for an hour. A light yellow polyimide powder started to precipitate slowly. The mixture was further heated for 5 hours with stirring and filtered. The resulting polyimide powder was washed with methanol and acetone and dried for 24 hours at 180°C under reduced pressure to give 13.03 grams (92.3% yield) of polyimide powder. The polyimide powder thus obtained had the same IR absorption spectrum as shown in Figure 1. X-ray analysis of the polyimide powder indicated a crystallinity of 44.7%. The polyimide powder was absolutely insoluble in aliphatic halogenated hydrocarbon solvents such as methylene chloride, chloroform and the like.

The polyimide powder had a glass transition temperature of 232°C, a melting point of 388°C and a 5% weight decrease temperature of 530°C.

The polyimide powder also had a melt viscosity of 7.3 x 10³ poises. The strand obtained was light brown, transparent and highly flexible.

### Comparative Example

The same polymerization procedure as described in Example 2 was repeated except 2,2-bis[4-(4-aminophenoxy)phenyl)-1,1,1,3,3,3-hexafluoropropane was used in place of 2,2-bis[4-(3-aminophenoxy)phenyl]-1,1,1,3,3,3-hexafluoropropane. The polyamic acid thus obtained had an inherent viscosity of 1.25 dl/g .

The polyamic acid solution was imidized chemically by the same procedure as described in Example 1. The polyimide powder thus obtained failed in a melt viscosity measuring test because the powder was infusible and no strand was obtained.

Also, a part of the polyamic acid solution was cast on a glass plate and heated an hour each at 100°C, 200°C and 300°C to obtain a polyimide film. The glass transition temperature of the polyimide film was high and indicated as 310°C.

### Example 4

A reaction vessel equipped with a stirrer, reflux condenser and nitrogen inlet tube was charged with 5.18 grams (0.01 mol) of 2,2-bis[4-(3-aminophenoxy)phenyl]-1,1,1,3,3,3-hexafluoropropane and 25.2 grams of N,N-dimethylacetamide, and 3.188 grams (0.0099 mol) of 3,3',4,4',-benzophenonetetracarboxylic dianhydride was added portion by portion at room temperature under a nitrogen atmosphere with care taken not to raise the solution temperature above 30°C. The reaction mixture was further stirred for 20 hours at room temperature.

The polyamic acid thus obtained had an inherent viscosity of 1.1 dl/g.

A part of the polyamic acid solution was cast on a glass plate and heated for one hour each at 100°C, 200°C and 300°C.

The light yellow and transparent polyimide film thus obtained had a glass transition temperature of 206°C and a 5% weight decrease temperature in air of 531°C.

The polyimide film also had a tensile strength of 13.1 kg/mm² and an elongation of 7%.

The polyimide film was inserted between cold rolled steel panels which were preheated at 130°C and pressed for five minutes at 340°C with a pressure of 20 kg/cm². The bonded specimen had a lap shear strength of 349 kg/cm² at room temperature and 210 kg/cm² at 150°C.

### Example 5

A reaction vessel equipped with a stirrer, reflux condenser and nitrogen inlet tube was charged with 10.36 grams (0.02 mol) of 2,2-bis[4-(3-aminophenoxy)phenyl]-1,1,1,3,3,3-hexafluoropropane and 147.3 grams of N,N-dimethylacetamide, and 6.01 grams (0.0194 mol) of bis(3,4-dicarboxyphenyl) ether dianhydride were added portion by portion at room temperature under a nitrogen atmosphere with care taken not to raise the solution temperature above 30°C. The reaction mixture was further stirred for 20 hours at room temperature.

The polyamic acid thus obtained had an inherent viscosity of 0.62 dl/g.

To the polyamic acid solution 8.08 grams (0.08 mol) of triethylamine and 12.24 grams (0.12 mol) of acetic anhydride were added dropwise and stirring was further continued at room temperature under a nitrogen atmosphere.

Light yellow polyimide powder started to precipitate at about 10 hours after the addition, and the stirring was further continued for 20 hours.

The separated polyimide powder was filtered, washed with methanol, and dried at 180°C for 24 hours under reduced pressure.

The polyimide powder thus obtained was 14.87 grams (95% yield) in amount and had a melt viscosity of 3.2 x 10³ poises.

The polyimide powder was inserted between cold rolled steel panels which were preheated at 130°C and pressed for five minutes at 340°C with a pressure of 20 kg/cm². The bonded specimen had a lap shear strength of 355 kg/cm² at room temperature and 200 kg/cm² at 150°C.

### Example 6

A reaction vessel equipped with a stirrer, reflux condenser and nitrogen inlet tube was charged with 5.18 grams (0.01 mol) of 2,2-bis[4-(3-aminophenoxy)phenyl]-1,1,1,3,3,3-hexafluoropropane and 24.6 grams of N,N-dimethylacetamide, and 3.01 grams (0.0097 mol) of bis(3,4-dicarboxyphenyl) ether dianhydride was added portion by portion at room temperature under a nitrogen atmosphere with care taken not to raise the solution temperature above 30°C. The reaction mixture was further stirred for 20 hours at room temperature.

The polyamic acid thus obtained had an inherent viscosity of 0.68 dl/g.

The polyamic acid solution was applied on a cold rolled steel panel which was previously washed with trichloroethylene and dried for one hour each at 100°C and 220°C. The coated panel was overlapped with another cold rolled steel panel and pressed for five minutes at 340°C with a pressure of 20 kg/cm².

The bonded specimen thus obtained had a lap shear strength of 360 kg/cm² at room temperature.

A part of the polyamic acid solution was cast on a glass plate and heated for one hour each at 100°C, 200°C and 300°C.

The colourless and transparent polyimide film thus obtained had a thickness of about 50 microns, a glass transition temperature of 191°C and a 5% weight decrease temperature in air of 538°C.

The polyimide film also had a tensile strength of 12.5 kg/mm² and an elongation of 8%.

Furthermore, the polyimide film had a light-transmittance of 89% and a haze of 0.52%.

The polyimide film was inserted between cold rolled steel panels which were preheated at 130°C and pressed for five minutes at 340°C with a pressure of 20 kg/cm². The bonded specimen had a lap shear strength of 362 kg/cm² at room temperature and 220 kg/cm² at 150°C.

### Example 7

A reaction vessel equipped with a stirrer, reflux condenser and nitrogen inlet tube was charged with 5.18 grams (0.01 mol) of 2,2-bis[4-(3-aminophenoxy)phenyl]-1,1,1,3,3,3-hexafluoropropane and 72.0 grams of N,N-dimethylacetamide, and 2.82 grams (0.0096 mol) of 3,3',4,4'-biphenyltetracarboxylic dianhydride was added portion by portion at room temperature under a nitrogen atmosphere with care taken not to raise the solution temperature above 30°C. The reaction mixture was further stirred for 20 hours at room temperature.

The polyamic acid thus obtained had an inherent viscosity of 0.52 dl/g.

To the polyamic acid solution, 8.08 grams (0.08 mol) of triethylamine and 12.24 grams (0.12 mol) of acetic anhydride were added dropwise and stirring was further continued at room temperature under a nitrogen atmosphere.

Light yellow polyimide powder started to precipitate at about 9 hours after the addition, and the stirring was further continued for 20 hours.

The separated polyimide powder was filtered, washed with methanol, and dried at 180°C for 24 hours under reduced pressure.

The polyimide powder thus obtained was 6.99 grams (96% yield) in amount and had a melt viscosity of 5.5 x 10³ poises.

The polyimide powder was inserted between cold rolled steel panels which were preheated at 130°C and pressed for five minutes at 340°C with a pressure of 20 kg/cm². The bonded specimen had a lap shear strength of 350 kg/cm² at room temperature and 218 kg/cm² at 150°C.

### Example 8

A reaction vessel equipped with a stirrer, reflux condenser and nitrogen inlet tube was charged with 5.18 grams (0.01 mol) of 2,2-bis[4-(3-aminophenoxy)phenyl]-1,1,1,3,3,3-hexafluoropropane and 24.3 grams of N,N-dimethylacetamide, and 2.91 grams (0.0099 mol) of 3,3',4,4'-biphenyltetracarboxylic dianhydride was added portion by portion at room temperature under a nitrogen atmosphere with care taken not to raise the solution temperature above 30°C. The reaction mixture was further stirred for 20 hours at room temperature.

The polyamic acid thus obtained had an inherent viscosity of 1.0 dl/g.

The polyamic acid solution was applied on a cold rolled steel panel which was previously washed with trichloroethylene and dried for one hour each at 100°C and 220°C. The coated panel was overlapped with another cold rolled steel panel and pressed for five minutes at 340°C with a pressure of 20 kg/cm².

The bonded specimen thus obtained had a lap shear strength of 350 kg/cm² at room temperature and 218 kg/cm² at 150°C.

A part of the polyamic acid solution was cast on a glass plate and heated for one hour each at 100°C, 200°C and 300°C.

The polyimide film thus obtained had a thickness of about 50 microns, a glass transition temperature of 220°C and a 5% weight decrease temperature in air of 538°C.

The polyimide film also had a tensile strength of 13.2 kg/mm² and an elongation of 36%.

Furthermore, the polyimide film had a light-transmittance of 85% and a haze of 0.6%.

The polyimide film was inserted between cold rolled steel panels which were preheated at 130°C and pressed for five minutes at 340°C with a pressure of 20 kg/cm². The bonded specimen had a lap shear strength of 355 kg/cm² at room temperature and 220 kg/cm² at 150°C.

## Claims

1. Use as a high-temperature resistance adhesive of a polyimide having recurring units of the formula: 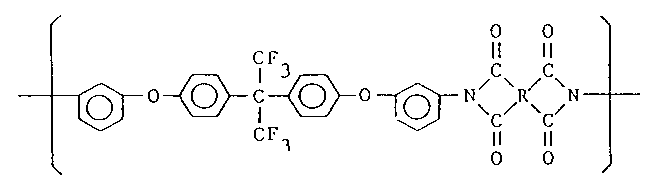 wherein R is a tetra-valent aromatic radical selected from: 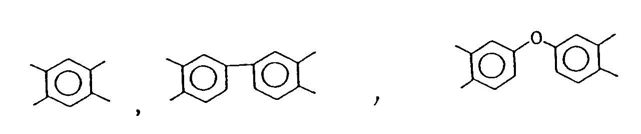 and

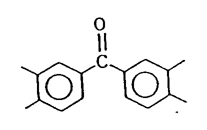

2. The use of a polyimide as claimed in claim 1, wherein R is:

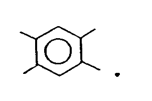

3. The use of a polyimide as claimed in Claim 1, wherein R is:

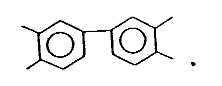

4. The use of a polyimide as claimed in claim 1, wherein R is:

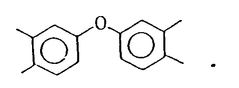

5. The use of a polyimide as claimed in claim 1, wherein R is:

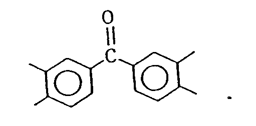

6. A method for adhering surfaces to one another which comprises applying a polyimide having recurring units of the formula: 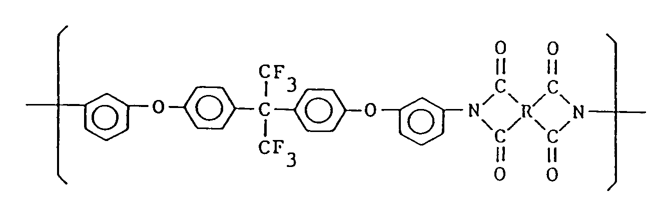 wherein R is a tetra-valent aromatic radical selected from: 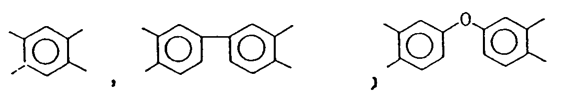 and 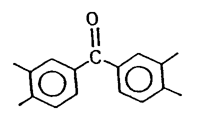 to a surface of a substrate, placing said surface of the substrate face to face with a surface of another substrate and pressing the two surfaces together while heating to a temperature above the glass transition temperature of said polyimide.

7. A method as claimed in claim 6, wherein said polyimide is in the form of a polyimide powder.

8. A method as claimed in claim 6, wherein said polyimide is in the form of a polyimide film.

9. A method as claimed in claim 6, wherein said polyimide is applied by first applying the polyamic acid precursor of said polyimide having recurring units of the formula: 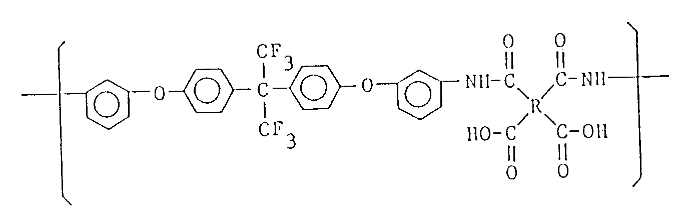 wherein R is a tetra-valent aromatic radical selected from: 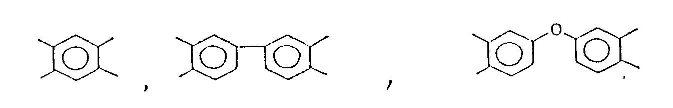 and 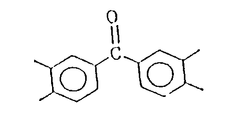 on the substrate surface and then imidizing said precursor in situ on the surface.

10. A method as claimed in any of claims 6 to 9, wherein R is:

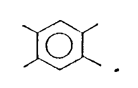

11. A method as claimed in any of claims 6 to 9, wherein R is:

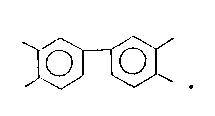

12. A method as claimed in any of claims 6 to 9, wherein R is:

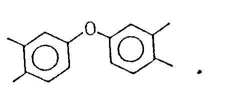

13. A method as claimed in any of claims 6 to 9, wherein R is:

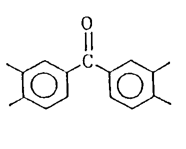

## Patentansprüche

1. Verwendung eines Polyimids als ein hochtemperaturfestes Klebemittel, wobei das Polyimid wiederkehrende Gruppen folgender Struktur besitzt: 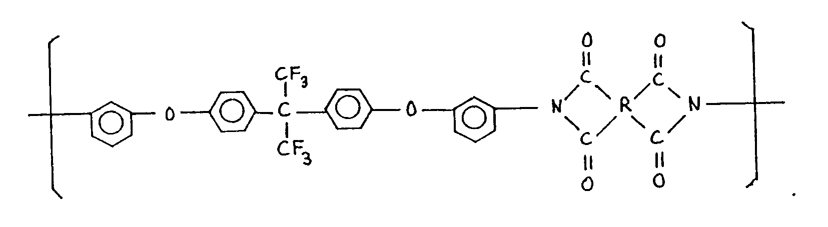 worin R ein tetravalentes aromatisches Radikal ist, ausgewählt aus: 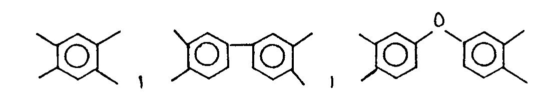 und

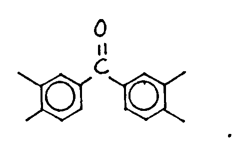

2. Verwendung eines Polyimids nach Anspruch 1, worin R bedeutet:

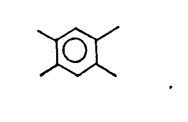

3. Verwendung eines Polyimids nach Anspruch 1, worin R bedeutet:

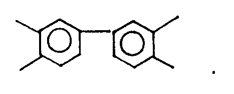

4. Verwendung eines Polyimids nach Anspruch 1, worin R beudetet:

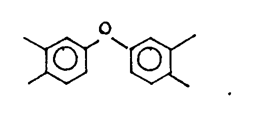

5. Verwendung eines Polyimids nach Anspruch 1, worin R bedeutet:

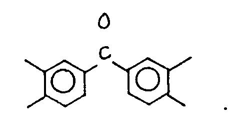

6. Verfahren zum Aneinanderkleben von Oberflächen, welches die Anwendung eines Polyimids mit wiederkehrenden Gruppen folgender Struktur einschließt: 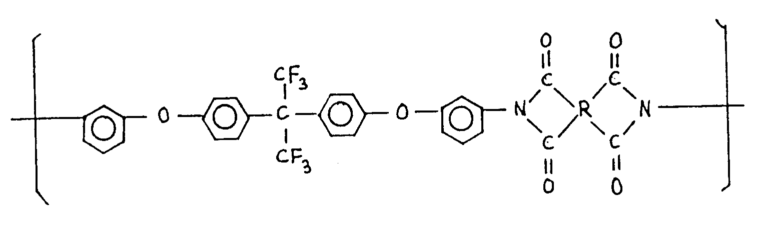 worin R ein tetravalentes aromatisches Radiakl ist, ausgewählt aus: 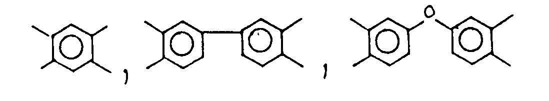 und 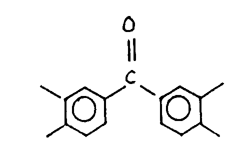 wobei das Polyimid auf die Oberfläche eines Substrats aufgebracht wird, dann diese Oberfläche mit der betreffenden Oberfläche eines anderen Substrats unter Druck zusammengebracht wird, während eine Aufheizung auf eine Temperatur oberhalb der Glas-Übergangstemperatur des Polyimids stattfindet.

7. Verfahren nach Anspruch 6, dadurch gekennzeichnet, daß das Polyimid als Polyimid-Pulver eingesetzt wird.

8. Verfahren nach Anspruch 6, dadurch gekennzeichnet, daß das Polyimid als ein Polyimid-Film eingesetzt wird.

9. Verfahren nach Anspruch 6, dadurch gekennzeichnet, daß das Polyimid angewendet wird durch zunächst erfolgenden Einsatz von Polyamic-Säure als Vorstufe des Polyimids mit (periodisch) wiederkehrenden Gruppen der Struktur: 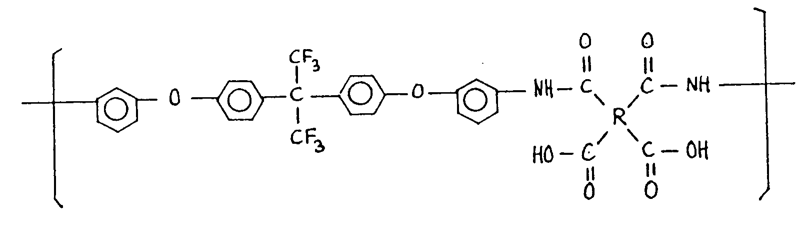 worin R ein tetravalentes aromatisches Radikal ist, ausgewählt aus: 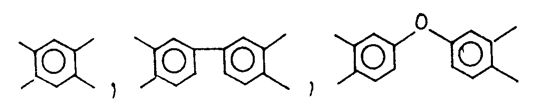 und 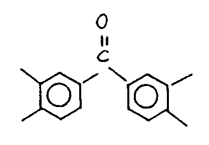 auf die Substratoberfläche und dann erfolgendem Imidieren der Vorstufe an Ort und Stelle auf der Oberfläche.

10. Verfahren nach einem der Ansprüche 6 bis 9, dadurch gekennzeichnet, daß für R gilt:

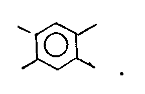

11. Verfahren nach einem der Ansprüche 6 bis 9, dadurch gekennzeichnet, daß für R gilt:

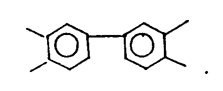

12. Verfahren nach einem der Ansprüche 6 bis 9, dadurch gekennzeichnet, daß für R gilt:

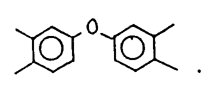

13. Verfahren nach einem der Ansprüche 6 bis 9, dadurch gekennzeichnet, daß für R gilt:

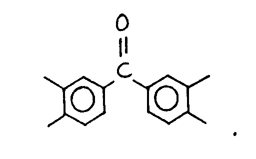

## Revendications

1. Utilisation, à titre d'adhésif résistant à une température élevée, d'un polyimide présentant des ensembles récurrents de formule: 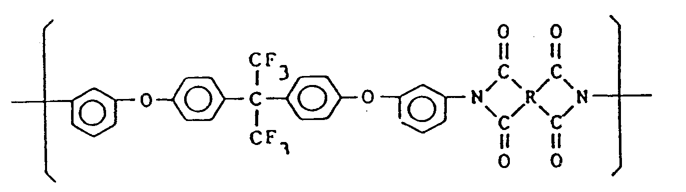 dans laquelle R est un radical aromatique tétravalent sélectionné parmi: 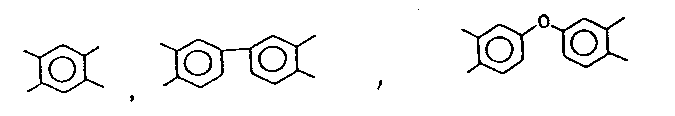 et

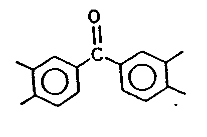

2. Utilisation d'un polyimide selon la revendication 1, dans lequel R est:

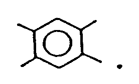

3. Utilisation d'un polyimide selon la revendication 1, dans lequel R est:

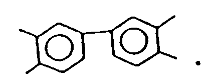

4. Utilisation d'un polyimide selon la revendication 1, dans lequel R est:

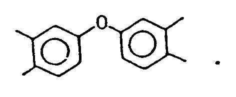

5. Utilisation d'un polyimide selon la revendication 1, dans lequel R est:

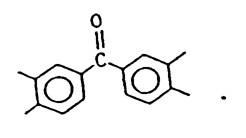

6. Procédé d'adhésion de surfaces entre elles, comprenant l'application d'un polyimide présentant des ensembles récurrents de formule: 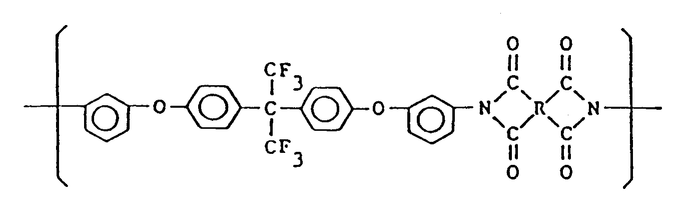 dans laquelle R est un radical aromatique tétravalent sélectionné parmi 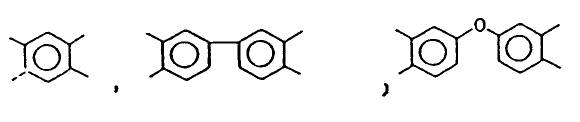 et 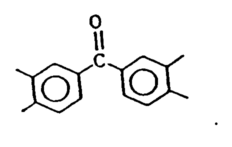 sur la surface d'un substrat, en plaçant ladite surface du substrat face-à-face avec une surface d'un autre substrat, et en comprimant les deux surfaces l'une contre l'autre tout en les chauffant à une température supérieure à la température de transition vitreuse dudit polyimide.

7. Procédé selon la revendication 6, dans lequel ledit polyimide se présente sous la forme d'une poudre de polyimide.

8. Procédé selon la revendication 6, dans lequel ledit polyimide se présente sous la forme d'un film de polyimide.

9. Procédé selon la revendication 6, dans lequel ledit polyimide est appliqué en appliquant d'abord le précurseur à base d'acide polyamique dudit polyimide doté d'ensembles récurrents de formule: 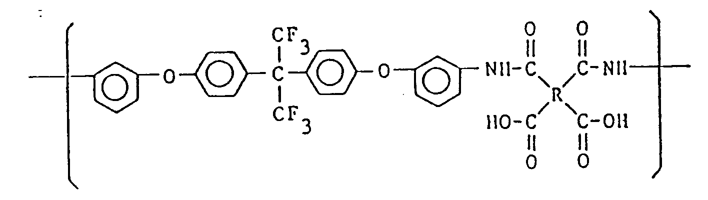 dans laquelle R est un radical aromatique tétravalent sélectionné parmi: 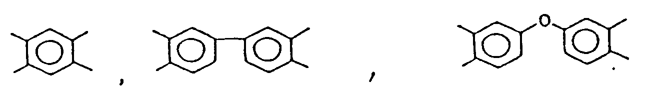 et 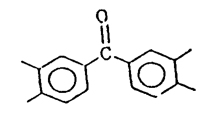 sur la surface de substrat et en réalisation une imidisation dudit précurseur en situ sur la surface.

10. Procédé selon l'une quelconque des revendications 6 à 9, dans lequel R est:

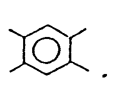

11. Procédé selon l'une quelconque des revendications 6 à 9, dans lequel R est:

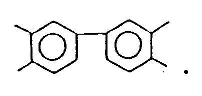

12. Procédé selon l'une quelconque des revendications 6 à 9, dans lequel R est:

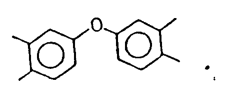

13. Procédé selon l'une quelconque des revendications 6 à 9, dans lequel R est:
